(19) **Europäisches Patentamt / European Patent Office / Office européen des brevets**

(11) **EP 3 605 015 B1**

(12) **EUROPEAN PATENT SPECIFICATION**

(45) Date of publication and mention of the grant of the patent:
**24.06.2026 Bulletin 2026/26**

(21) Application number: **18771059.5**

(22) Date of filing: **15.03.2018**

(51) International Patent Classification (IPC):
**G01C 3/06** *(2006.01)*　　**G01C 3/00** *(2006.01)*
**G06T 1/00** *(2006.01)*　　**G06T 7/80** *(2017.01)*
**G08G 1/16** *(2006.01)*　　**G01S 17/06** *(2006.01)*

(52) Cooperative Patent Classification (CPC):
**G01C 3/06; G01S 11/12**

(86) International application number:
**PCT/JP2018/010154**

(87) International publication number:
**WO 2018/173908 (27.09.2018 Gazette 2018/39)**

(54) **STEREO IMAGE PROCESSING DEVICE**

STEREOBILDVERARBEITUNGSVORRICHTUNG

DISPOSITIF DE TRAITEMENT D'IMAGE STÉRÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2017 JP 2017058390**

(43) Date of publication of application:
**05.02.2020 Bulletin 2020/06**

(73) Proprietor: **Astemo, Ltd.**
**Tokyo 100-0004 (JP)**

(72) Inventors:
• **KIDO, Hideaki**
**Tokyo 100-8280 (JP)**

• **OSATO, Takuma**
**Tokyo 100-8280 (JP)**
• **NAGASAKI, Takeshi**
**Hitachinaka-shi**
**Ibaraki 312-8503 (JP)**

(74) Representative: **MERH-IP Matias Erny Reichl Hoffmann**
**Patentanwälte PartG mbB**
**Paul-Heyse-Straße 29**
**80336 München (DE)**

(56) References cited:
　JP-A- 2009 008 539　　JP-A- 2014 085 120
　JP-A- 2017 049 146　　JP-A- H10 267 618
　US-A- 5 383 013　　US-A1- 2005 062 615
　US-A1- 2009 046 924

**Description**

Technical Field

The present invention relates to a stereo image processing device.

Background Art

The Summary paragraph of PTL 1 discloses "A stereo arithmetic circuit 6 calculates disparity by stereo matching, on the basis of a pair of captured images obtained by a stereo camera. A recognition unit 10 calculates the distance to an object, on the basis of the disparity and vanishing point disparity. A corrective arithmetic unit 13 calculates a plurality of spatially parallel approximate straight lines extending in the distance direction in the plane of one of the captured images, calculates a first vanishing point from the intersection of the approximate straight lines, calculates a plurality of parallel approximate straight lines extending in the distance direction in the plane of the other captured image, calculates a second vanishing point from the intersection of the approximate straight lines, and corrects the vanishing point disparity on the basis of the difference between the first vanishing point and the second vanishing point."

The Summary paragraph of PTL 2 discloses "A stereo image processing device 1 includes: a stereo imaging means 2 that captures a plurality of images from different viewpoints; a disparity detecting means 7 that detects disparity dp of the subject, on the basis of the plurality of captured images captured by the stereo imaging means 2; an object detecting means 11 that detects objects, on the basis of the disparity dp detected by the disparity detecting means 7 and a disparity offset value DP; and a disparity offset value correcting means 12 that corrects the disparity offset value DP, on the basis of the disparity dp corresponding to an object whose size in real space does not change with time among the objects detected by the object detecting means 11, and on change in the apparent size b of the object."

Citation List

Patent Literatures

PTL 1: JP 2003-83742 A

PTL 2: JP 2009-008539 A

Summary of Invention

Technical Problem

By the method disclosed in PTL 1, it is not possible to perform correction, unless there is a linear subject serving as the reference for vanishing point calculation, such as a traffic lane linearly extending ahead of the camera or a linear boundary portion between a wall and a floor.

By the method disclosed in PTL 2, it is necessary to constantly detect, for each frame to be calculated, the distance between two specific points on the target object to be imaged in front of the camera and the area of the target object in time series. However, doing so is difficult in some environments or with some objects. For example, there are cases where detection is difficult when the illumination environment changes in time series, or the posture of the target object changes. Therefore, there is room for improvement. When there is only a small number of scenes that can be estimated, there is a high possibility of losing the opportunity to correct distance measurement, and outputting an incorrect distance.

Therefore, the present invention aims to provide a highly reliable stereo image processing device by reducing distance errors and relative speed errors.

Solution to Problem

The invention is set out in the appended set of claims. Preferable embodiments are defined in the dependent claims.

Advantageous Effects of Invention

According to the present invention, it is possible to provide a highly reliable stereo image processing device by reducing distance errors and relative speed errors.

Brief Description of Drawings

[FIG. 1] FIG. 1 is a diagram for explaining the configuration of an in-vehicle stereo camera.
[FIG. 2] FIG. 2 is a diagram illustrating estimation of a disparity offset with a stereo camera.
[FIG. 3] FIG. 3 is a diagram for explaining a method of calculating an enlargement ratio.
[FIG. 4] FIG. 4 is a diagram for explaining a method of calculating a disparity offset in each frame.
[FIG. 5] FIG. 5 is a diagram for explaining a method of calculating a disparity offset in any appropriate frame.
[FIG. 6] FIG. 6 is a diagram for explaining a method of calculating a disparity offset using a cumulative value.
[FIG. 7] FIG. 7 is a diagram for explaining geometric transform and disparity distributions.

Description of Embodiments

In recent years, in-vehicle camera devices that are image recognition devices that recognize an object on the basis of captured images have spread widely. In this trend, there is an increasing demand for various recognition functions for safe driving and automatic driving. Of these devices, a stereo camera device that detects an object with two cameras arranged side by side simultaneously measures visual information depending on images, and information about the distance to an object. Accordingly, such a stereo camera device is capable of recognizing various objects (persons, vehicles, three-dimensional objects, road surfaces, road signs, signboards, and the like) existing around the vehicle in detail, and is believed to contribute to safety improvement in assisting driving.

A stereo camera calculates a distance from the difference between the positions at which images of the same object are captured by right and left cameras. This difference is called disparity. The longer the distance, the smaller the disparity. The shorter the distance, the greater the disparity. Where the disparity is represented by d, and the distance is represented by Z, the relationship is inversely proportional, and is expressed as follows.

$$Z = \alpha/d \cdots (\text{Expression 1})$$

Here, $\alpha$ represents a value unique to the stereo camera, and is calculated as $\alpha = fB/c$, from the focal length (f) of the lens, the physical pixel size (c), and the base length (B) of the distance between the cameras.

Although d is ideally 0 at an infinitely far distance, it is known that d is not 0 in practice due to changes over time such as the shock and the thermal deformation caused when the cameras were attached to the vehicle. If this difference is a disparity offset ($\varepsilon d$), the observed distance Z' is expressed as follows.

$$Z' = \alpha/(d + \varepsilon d) \cdots (\text{Expression 2})$$

As described above, this $\varepsilon d$ changes over time, and a difference occurs in the measured distance or relative velocity. In some cases, this leads to erroneous control of the vehicle. Therefore, it is necessary to estimate this value $\varepsilon d$ while traveling, and correct the measured distance Z' to Z by performing correction using the observed disparity.

In view of the above, the present embodiment will be described below with reference to the drawings. It should be noted that the present invention is not limited to the embodiment described below, and various components may be replaced, modified, or omitted without substantially departing from the objective and effects of the invention.

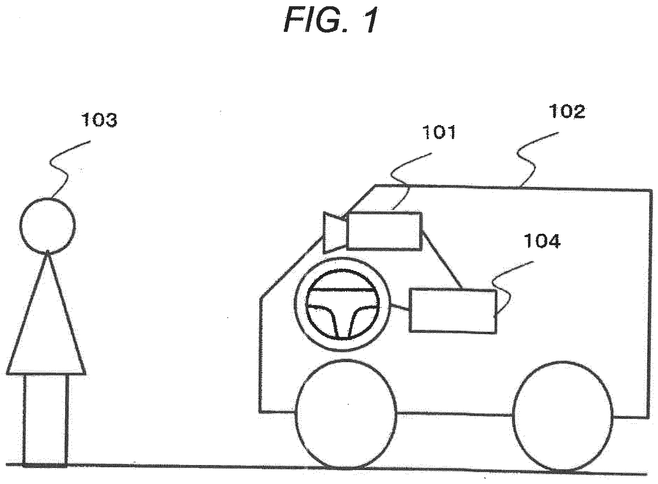

First, a vehicle control system using a stereo camera is shown in FIG. 1. A stereo camera 101 is mounted on a vehicle 102. The stereo camera 101 measures a distance to an object 103 ahead and a relative speed, for example, and transmits the results to a vehicle control unit 104. The vehicle control unit determines the control on the brake and the accelerator from the distance to the object and the relative speed, to operate the vehicle.

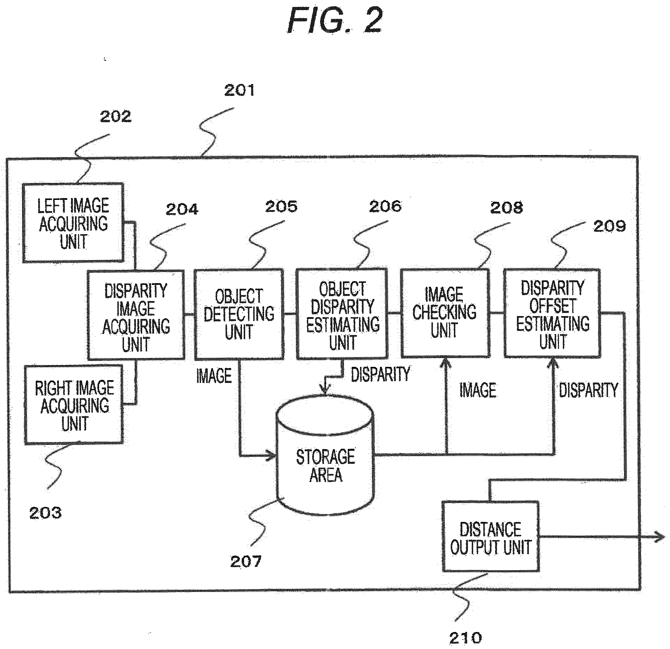

An embodiment of a stereo image processing device of this embodiment is shown in FIG. 2. A stereo camera 201 includes imaging units on its right and left sides, and a left image acquiring unit 202 and a right image acquiring unit 203 acquire a pair of images. Note that the left image acquiring unit 202 and the right image acquiring unit 203 are collectively referred to as a pair of image acquiring units 202 and 203.

The stereo camera 201 further includes a disparity image acquiring unit 204 that identifies the position where the same object appears in the right and left images, and determines the difference in position between the right and left images as disparity for each image coordinate, to calculate a disparity image. The stereo camera 201 also includes an object detecting unit 205 that identifies a region in an image of the object from the disparity image, the left image, and the right image that have been obtained as described above, and an object disparity estimating unit 206 that calculates the disparity of the object. The disparity and the image region of the object are held in a storage area (a storage unit) 207, and can be referred to in the processing of the next imaging frame and the later imaging frames. An image checking unit 208 checks the image region of the current object against a past object image region in which the same object appears, to estimate a parameter of geometric deformation between the past and current image regions. A disparity offset estimating unit 209 estimates the value of the disparity offset, using the geometric deformation parameter and the disparity between the current frame and the past frame. A distance output unit 210 corrects the distance, on the basis of the calculated disparity offset, and outputs the corrected distance.

First, geometric deformation between images in the above example is described only in terms of an enlargement ratio (or a reduction ratio) between images.

In that case, the target object to be used to estimate a disparity offset is preferably an object having as equal a distance as possible in the image region. For example, the target object may be the rear of a leading vehicle or a signboard facing the vehicle.

Here, it is possible to calculate the enlargement ratio between the image region in which the target object appears in one frame and the image region in which the same object appears in the other frame, by enlarging (reducing) the image region of the one frame and adopting the enlargement ratio obtained at the time when the image region becomes most similar to the other image region. The similarity between image regions can be calculated according to the equation shown below, for example.

$$M = 1/\Sigma(J(s*x + x', s*y + y') - I(x, y))^2 \cdots \text{(Expression 3)} \qquad \text{(Expression 3)}$$

Here, x and y represent the coordinates of the image, s represents the enlargement ratio, x' and y' represent the movement components, and I and J represent the gray value of the image at the given coordinates. J represents a past image, and I represents the current image. $\Sigma$ is a summation sign, and all the pairs of (x, y) existing in the image region to be compared are the summation targets. It is considered that, the greater the value M, the more similar the two images, and, the smaller the value, the more different the two images.

Note that the calculation of similarity is not necessarily performed according to this equation. For example, a weight may be added to each coordinate in the above equation, or a criterion such as normalized cross-correlation, a sum of absolute difference values, or mutual information may be used.

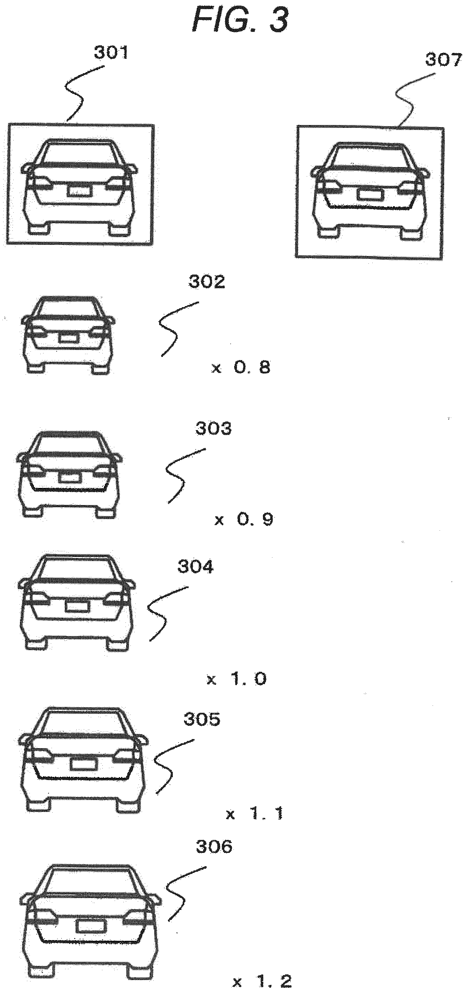

An example method of calculating an enlargement ratio is shown in FIG. 3. An image 301 is made 0.8 times larger (an image 302), 0.9 times larger (an image 303), 1.0 time larger (an image 304), 1.1 times larger (an image 305), and 1.2 times larger (an image 306), and the value with the highest degree of similarity to the other image 307 is adopted as the enlargement ratio between the two frames. However, the calculation of similarity is applied only to the rear of the vehicle in the example illustrated in FIG. 3. The condition necessary for estimating a disparity offset using an enlargement ratio is that the target image region has as equal a distance as possible. Therefore, sideview mirrors are preferably not included in the image region. However, there is no need to specifically identify the rear of the vehicle, and an approximate position of the rear of the vehicle may be identified.

For example, the ratio of 1.1 is adopted as the enlargement ratio at the time with the highest degree of similarity in this case. Note that the method of calculating an enlargement ratio is not limited to any particular method. For example, the closest enlargement ratio may be determined by a brute-force method in enlargement ratio sampling as shown in FIG. 3, or it is possible to use a method based on a convergent operation such as the Lucas Kanade technique, or a method based on random sampling by Particle Filter or RANSAC or the like.

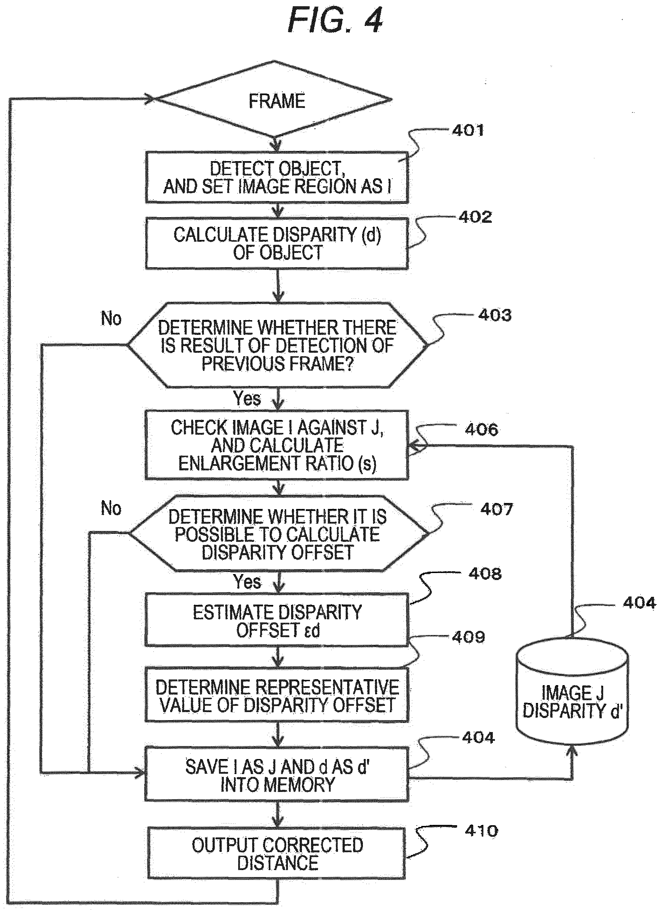

Referring now to FIGS. 4, 5, and 6, examples of processing procedures for estimating a disparity offset using an enlargement ratio determined as described above are described centering particularly on the object detecting unit 205, the object disparity estimating unit 206, the storage area 207, the image checking unit 208, the disparity offset estimating unit 209, and the distance output unit 210.

Of the examples, FIG. 4 shows the simplest example. This is a method of estimating a disparity offset by comparing two frames: a frame previously stored in the storage area and the current frame. First, an object to be a target is detected by the object detecting unit, and its image region is set as I (step 401). The disparity d of the object is then calculated by the object disparity estimating unit (step 402), and a check is then made to determine whether the detected object is stored in the storage area, or whether there is a result of detection of the previous frame (step 403). If the previous frame has not been detected, the image region as J and the disparity d as d' are temporarily stored (step 405) into the storage area (step 404). The process then moves on to processing of the next imaging frame. If the previous frame has been detected, the image region I of the current frame is checked against the image region J of the past frame, and an enlargement ratio s is calculated (step 406). Next, a check is made to determine whether the enlargement ratio s, the disparity d of the current frame, and the disparity d' of the past frame may be used to calculate the disparity offset (step 407). If it is determined that those values may be used, the disparity offset $\varepsilon d$ is calculated according to the equation shown below (step 408).

$$\varepsilon d = (d - s*d')/(1 - s) \cdots (\text{Expression 4})$$

Note that (Expression 4) is derived as described below.

The enlargement ratio of an image is represented by the ratio of a distance Z. Accordingly, s = Z'/Z, where Z represents the distance to the current frame, and Z' represents the distance to the past frame. Since Z = $\alpha$/d according to (Expression 1), it is possible to express the enlargement ratio as s = d/d'. At this stage, if an offset ($\varepsilon d$) is added to the measured d, s = (d - $\varepsilon d$)/(d' - $\varepsilon d$). As calculation is further performed with respect to $\varepsilon d$, (Expression 4) is obtained.

This estimation process is repeated, and the representative value of the disparity offset is determined by calculating the average, median, or mode value of $\varepsilon d$ determined in the respective frames (step 409), and the distance is corrected with the determined disparity offset (step 410). For example, an example of the reference for determining whether to perform calculation (step 407) is as follows. First, whether s is infinitely close to 1 is adopted as one criterion. As shown in (Expression 4), if s becomes as close to 1 as possible, $\varepsilon d$ becomes infinite, and is not suitable as an estimated value. Therefore, whether the difference between 1 and s is larger than 0 can be one of the determination criteria. Next, when measurement errors of s, d, and d' can be estimated, the magnitudes of the errors may be used in determination. Of course, it is not possible to perform calculation when s does not match well, and measurement has failed. Further, when s is relatively large, the image is enlarged or reduced, and a relative velocity exists between the target object and the vehicle. Therefore, when the relative velocity between the object and the vehicle can be determined, s may be used when the relative velocity is equal to or higher than a certain velocity. Furthermore, whether the images for which enlargement ratios are to be calculated have equal distances may be a determination criterion. As mentioned in the beginning, the target object to be used in estimating a disparity offset is preferably an object having as equal a distance as possible in the image region. Therefore, if the disparity in the image region is greatly scattered, it is determined that calculation is not possible.

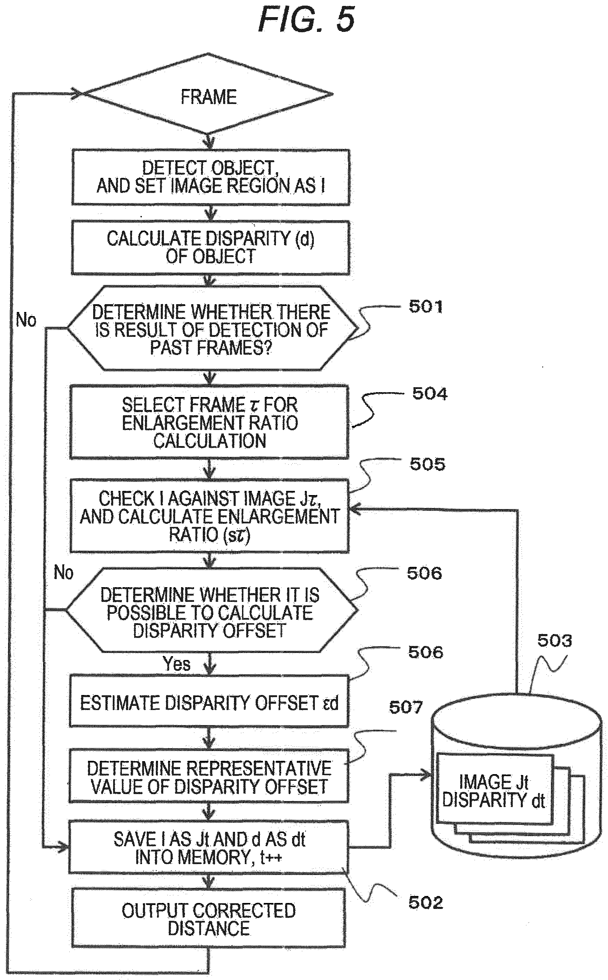

FIG. 5 shows a method of calculating an enlargement ratio between images of any appropriate frames. The merit of comparison between appropriate frames is that the fluctuation of images is large with respect to an object having a relative velocity or the like, the enlargement ratio s becomes further from 1, and accordingly, the probability that disparity offset calculation is determined to be possible becomes high when a check is made to determine whether a disparity offset can be calculated (step 407 in FIG. 4).

The method of acquiring information about the current frame by detecting an object and calculating the disparity of the object is the same as in FIG. 4. After the information about the current frame is acquired, a check is made to determine whether there is a result of detection of past frames (step 501). The difference from step 403 is that a check is made to determine whether there is a result of detection of the latest frame in step 403, but a check is made to determine whether there is a result of detection of any of the past frames in step 501. Only a single past frame may have a result of detection, or a plurality of frames may have results of detection.

If there is no information about any past frame, the image region I and the disparity d are stored (step 502) as Jt and dt, to which information about the acquired frame(s) t is added, into the storage area (step 503). The storage area stores history information about image regions detected in the past. When there exist the image region of the current frame and the image regions of the past frames, the image region of any appropriate frame registered in the storage area is selected (step 504). At this stage, one frame may be selected, or a plurality of frames may be selected. As the set of frames selected at this stage is represented by T = {$\tau 1, \tau 2, \tau 3$ ...}, the enlargement ratio ($s\tau$) is calculated from the image J$\tau$ (where $\tau \in$ T) and I (step 505). A check is then made to determine whether it is possible to perform disparity offset calculation (step 506) as in FIG. 4, and the disparity offset is calculated from the enlargement ratio $s\tau$ and the disparity d$\tau$ (step 507). At this stage, the disparity offset $\varepsilon d$ can be calculated according to the equation shown below.

$$\varepsilon d = (d - s\tau*d\tau)/(1 - s\tau) \cdots (\text{Expression 5})$$

A representative value is determined from the disparity offset value calculated in this manner, and distance correction output is performed.

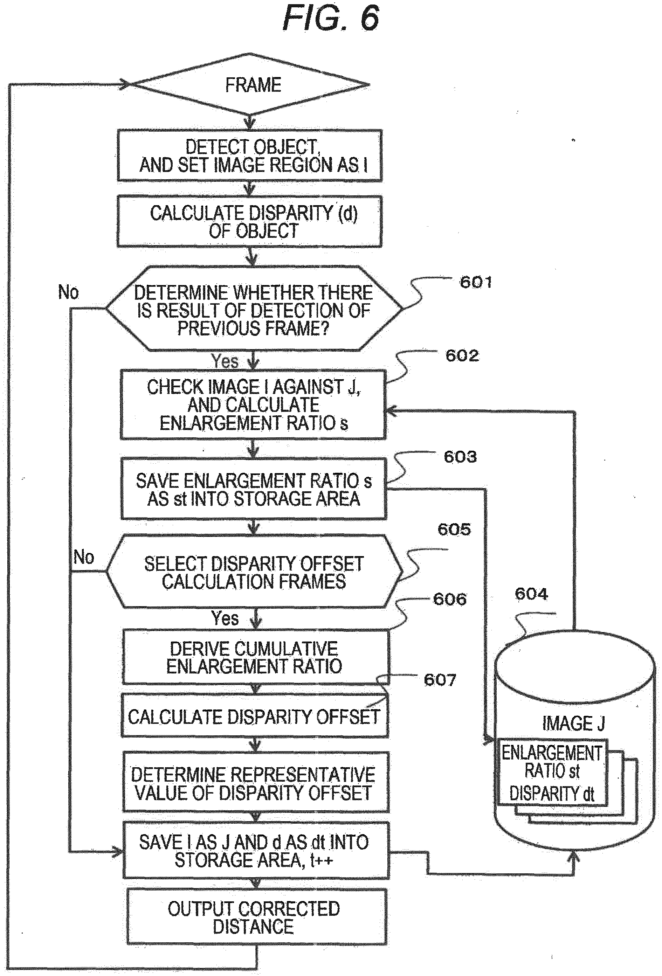

Since images in a time series are compared with each other by the method shown in FIG. 5, it is necessary in principle to store images of all the past frames in the storage area if all the combinations are to be viewed. Therefore, a large storage area is required, which becomes a problem in a system having only a small storage area. To counter this, a method of shortening the time series to be stored may be adopted, but it is also possible to use the method shown in FIG. 6.

In FIG. 6, if there is detection in the current frame, and it is determined that there is a result of detection of the previous frame (step 601), the enlargement ratio s is calculated from the images of the current frame and the previous frame (step 602). After the calculation, the enlargement ratio is stored (step 603) as st into the storage area (step 604).

The image stored in the storage area may be the two images: the image of the current target object and the image of the target object in the previous frame. However, the disparity dt and the enlargement ratio st of each of the past frames in the history are necessary.

After the enlargement ratio st is stored, disparity offset calculation frames are selected (step 606). The set of the frames selected at this stage is represented by K = {κ1, κ2, κ3, ...}. When attention is paid to a certain frame κ ∈ K, the enlargement ratios of all the frames from the current frame to the κ can be accumulated, and a cumulative enlargement ratio sκ is obtained in step 606. This is expressed by the mathematical expression shown below.

$$\text{sκ} = \text{Πsk} \cdots (\text{Expression } 6)$$

Here, Π is the total multiplication sign, and k is multiplied in chronological order by all the recorded enlargement ratios from the current frame to the frame κ. Using this sκ, the disparity offset is calculated as follows (step 607).

$$\text{εd} = (d - \text{sκ*dκ'}))/(1 - \text{sκ}) \cdots (\text{Expression } 7)$$

Here, dκ' represents the disparity registered one before dκ. That is, κ' = κ - 1. These calculations are repeated, so that the final disparity offset is determined. According to the method shown in FIG. 6, an image of each frame is not stored in the storage area, but only the enlargement ratio between two frames is stored for each frame. Thus, the storage area to be used can be made smaller.

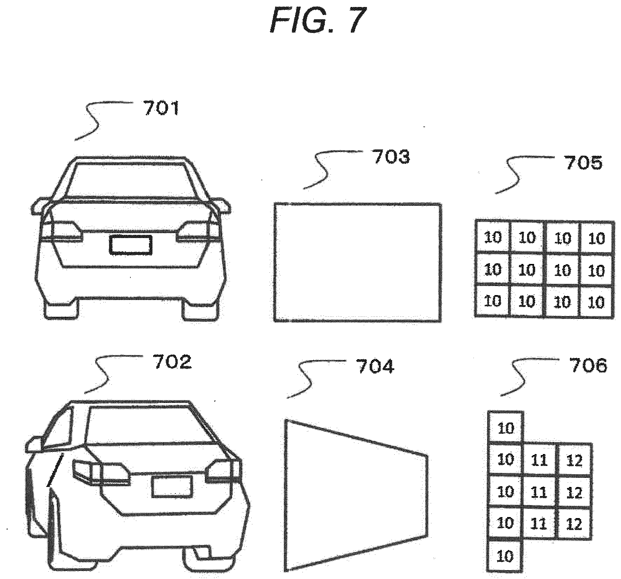

Next, the geometric transform in a case where the target object tilts is described. An example is shown in FIG. 7. FIG. 6 shows a situation where a vehicle whose rear is visible in one frame (step 701) tilts in the next frame (step 702). Steps 703 and 704 are transform in which the rear of the vehicle is replaced by squares, which are transform from a rectangle to a trapezoid. Steps 705 and 706 are distributions of disparities corresponding to the respective image regions, and the numerical values inside the squares indicate the disparity values. The transform between the two frames can be performed by determining W, which minimizes the expression shown below.

$$E = \Sigma(J(W(x, y)) - I(x, y))^2$$

Here, W is a sign for projective transform of x and y, and the following operation is performed with coordinates (x, y) as the input, so that (x', y') is output.

$$(x', y', 1)^T = A(x, y, 1)^T$$

Here, T represents transpose of a matrix, and A represents a 3×3 matrix. Projective transform is shown by this matrix A. The parameters for this projective transform can be determined by the image checking unit. The above mentioned enlargement ratio can also be expressed by this expression of projective transform, which is as follows.

$$A = (s\ 0\ 0\ ;\ 0\ s\ 0\ ;\ 0\ 0\ 1)$$

Here, ; represents a delimiter between lines.

On the other hand, the parameters for projective transform can be calculated, as long as the distance at each point can be determined. Since a distance can be calculated from disparity, it is also possible to determine projective transform A' from the difference between the disparity distributions. However, the projective transform A' obtained here includes a disparity offset, and thus, the disparity offset can be estimated from the relationship between A and A'.

This method can be applied to FIGS. 4 through 6, and two-dimensional distributions of disparities, instead of disparities (d), are stored in the storage area. As for (Expression 6), a matrix product is used, instead of a scalar product.

| | |
|---|---|
| 101, 201 | stereo camera (imaging means) |
| 102 | vehicle |
| 104 | vehicle control unit |
| 202 | left image acquiring unit |
| 203 | right image acquiring unit |
| 204 | disparity image acquiring unit |
| 205 | object detecting unit |
| 206 | object disparity estimating unit |
| 207 | storage area (storage unit) |

208        image checking unit
209        disparity offset estimating unit
210        distance output unit

**Claims**

1. A stereo image processing device, comprising:

   an imaging means (101, 201);
   a pair of image acquiring units;
   a disparity image acquiring unit (204) configured to acquire a disparity image by identifying a position where a same object appears in a right image and a left image, which are acquired by the pair of image acquiring units (202, 203), and by determining a difference in position between the right image and the left image for each image coordinate;
   an object detecting unit (205) configured to detect an image region in which the object appears on the basis of the images acquired by the pair of image acquiring units and the disparity image;
   an object disparity estimating unit (206) configured to estimate a disparity of the object;
   a storage unit (207) configured to store the disparity obtained by the object disparity estimating unit (206) and the image region in which the object as detected by the object detecting unit (205) appears;
   an image checking unit (208) configured to check the image region of a current object against an image region of a past object in which the same object appears, to estimate a geometric deformation parameter between the past image region and the current image region;
   a disparity offset estimating unit (209) configured to calculate a disparity offset based on the geometric deformation parameter and the disparity between the current image region and the past image region; and
   a distance output unit (210) configured to correct a distance to the object on the basis of the disparity estimated by the disparity offset estimating unit (209),
   wherein the image checking unit (208) determines geometric deformation by which one of image regions in which the same object appears in a current image and a past image is subjected to geometric deformation, wherein a higher degree of similarity is achieved between the deformed image (302, 303, 304, 305, 306) and an other image (307),
   **characterized in that**:
   the geometric deformation determined by the image checking unit (208) is trapezoidal deformation between images.

2. The stereo image processing device according to claim 1, wherein
   the disparity offset estimating unit (209) is configured to determine whether it is possible to perform estimation on the basis of at least one of values of the geometric deformation, which is to be used in calculating the disparity offset and is a result of the checking performed by the image checking unit (208), and a disparity.

3. The stereo image processing device according to claim 1, wherein
   the geometric deformation determined by the image checking unit (208) is an enlargement ratio between images.

4. The stereo image processing device according to claim 2, wherein
   an object to be used by the image checking unit (208) is a plane.

5. The stereo image processing device according to claim 1, wherein

   the storage unit (207) is configured to store the geometric deformation determined by the image checking unit (208), and
   the disparity offset estimating unit (209) is configured to estimate the disparity offset from a total product of geometric deformation calculated in the past and at the current time in a time span in which estimation is performed, and from disparities in the past and at the current time in the time span.

**Patentansprüche**

1. Stereobildverarbeitungsvorrichtung, umfassend:

eine Bildgebungseinrichtung (101, 201);

ein Paar von Bilderfassungseinheiten;

eine Disparitätsbilderfassungseinheit (204), die konfiguriert ist, ein Disparitätsbild durch Identifizieren einer Position, an der ein gleiches Objekt in einem rechten Bild und einem linken Bild erscheint, die durch das Paar von Bilderfassungseinheiten (202, 203) erfasst werden, und durch Bestimmen einer Positionsdifferenz zwischen dem rechten Bild und dem linken Bild für jede Bildkoordinate zu erfassen;

eine Objektdetektionseinheit (205), die konfiguriert ist, einen Bildbereich, in dem das Objekt erscheint, auf der Basis der durch das Paar von Bilderfassungseinheiten erfassten Bilder und des Disparitätsbilds zu detektieren;

eine Objektdisparitätsschätzeinheit (206), die konfiguriert ist, eine Disparität des Objekts zu schätzen;

eine Speichereinheit (207), die konfiguriert ist, die durch die Objektdisparitätsschätzeinheit (206) erhaltene Disparität und den Bildbereich, in dem das durch die Objektdetektionseinheit (205) detektierte Objekt erscheint, zu speichern;

eine Bildprüfeinheit (208), die konfiguriert ist, den Bildbereich eines aktuellen Objekts gegen einen Bildbereich eines vergangenen Objekts, in dem das gleiche Objekt erscheint, zu prüfen, um einen geometrischen Verformungsparameter zwischen dem vergangenen Bildbereich und dem aktuellen Bildbereich zu schätzen;

eine Disparitätsversatzschätzeinheit (209), die konfiguriert ist, einen Disparitätsversatz auf der Basis des geometrischen Verformungsparameters und der Disparität zwischen dem aktuellen Bildbereich und dem vergangenen Bildbereich zu berechnen; und

eine Abstandsausgabeeinheit (210), die konfiguriert ist, einen Abstand zu dem Objekt auf der Basis der durch die Disparitätsversatzschätzeinheit (209) geschätzten Disparität zu korrigieren,

wobei die Bildprüfeinheit (208) eine geometrische Verformung bestimmt, durch die einer von Bildbereichen, in dem das gleiche Objekt in einem aktuellen Bild und einem vergangenen Bild erscheint, einer geometrischen Verformung unterzogen wird, wobei ein höherer Grad an Ähnlichkeit zwischen dem verformten Bild (302, 303, 304, 305, 306) und einem anderen Bild (307) erreicht wird,

**dadurch gekennzeichnet, dass**:

die durch die Bildprüfeinheit (208) bestimmte geometrische Verformung eine trapezförmige Verformung zwischen Bildern ist.

**2.** Stereobildverarbeitungsvorrichtung nach Anspruch 1, wobei

die Disparitätsversatzschätzeinheit (209) konfiguriert ist, zu bestimmen, ob es möglich ist, eine Schätzung auf der Basis von mindestens einem von Werten der geometrischen Verformung, die bei der Berechnung des Disparitätsversatzes zu verwenden ist und ein Ergebnis der durch die Bildprüfeinheit (208) durchgeführten Prüfung ist, und einer Disparität durchzuführen.

**3.** Stereobildverarbeitungsvorrichtung nach Anspruch 1, wobei

die durch die Bildprüfeinheit (208) bestimmte geometrische Verformung ein Vergrößerungsverhältnis zwischen Bildern ist.

**4.** Stereobildverarbeitungsvorrichtung nach Anspruch 2, wobei

ein durch die Bildprüfeinheit (208) zu verwendendes Objekt eine Ebene ist.

**5.** Stereobildverarbeitungsvorrichtung nach Anspruch 1, wobei

die Speichereinheit (207) konfiguriert ist, die durch die Bildprüfeinheit (208) bestimmte geometrische Verformung zu speichern, und

die Disparitätsversatzschätzeinheit (209) konfiguriert ist, den Disparitätsversatz aus einem Gesamtprodukt einer in der Vergangenheit und zum aktuellen Zeitpunkt in einer Zeitspanne, in der eine Schätzung durchgeführt wird, berechneten geometrischen Verformung und aus Disparitäten in der Vergangenheit und zum aktuellen Zeitpunkt in der Zeitspanne zu schätzen.

**Revendications**

**1.** Dispositif de traitement d'image stéréo, comprenant :

un moyen d'imagerie (101, 201) ;

une paire d'unités d'acquisition d'image ;

une unité d'acquisition d'image de disparité (204) configurée pour acquérir une image de disparité en identifiant une position où un même objet apparaît dans une image droite et une image gauche, qui sont acquises par la paire d'unités d'acquisition d'image (202, 203), et en déterminant une différence de position entre l'image droite et l'image gauche pour chaque coordonnée d'image ;

une unité de détection d'objet (205) configurée pour détecter une région d'image dans laquelle l'objet apparaît sur la base des images acquises par la paire d'unités d'acquisition d'image et de l'image de disparité ;

une unité d'estimation de disparité d'objet (206) configurée pour estimer une disparité de l'objet ;

une unité de stockage (207) configurée pour stocker la disparité obtenue par l'unité d'estimation de disparité d'objet (206) et la région d'image dans laquelle l'objet tel que détecté par l'unité de détection d'objet (205) apparaît ;

une unité de vérification d'image (208) configurée pour vérifier la région d'image d'un objet actuel par rapport à une région d'image d'un objet passé dans lequel le même objet apparaît, pour estimer un paramètre de déformation géométrique entre la région d'image passée et **la** région d'image actuelle ;

une unité d'estimation de décalage de disparité (209) configurée pour calculer un décalage de disparité sur la base du paramètre de déformation géométrique et de la disparité entre la région d'image actuelle et la région d'image passée ; et

une unité de sortie de distance (210) configurée pour corriger une distance jusqu'à l'objet sur la base de la disparité estimée par l'unité d'estimation de décalage de disparité (209),

dans lequel l'unité de vérification d'image (208) détermine une déformation géométrique par laquelle l'une de régions d'image dans lesquelles le même objet apparaît dans une image actuelle et une image passée est soumise à une déformation géométrique, dans lequel un degré plus élevé de similarité est obtenu entre l'image déformée (302, 303, 304, 305, 306) et une autre image (307),

**caractérisé en ce que** :

la déformation géométrique déterminée par l'unité de vérification d'image (208) est une déformation trapézoïdale entre des images.

2. Dispositif de traitement d'image stéréo selon la revendication 1, dans lequel

l'unité d'estimation de décalage de disparité (209) est configurée pour déterminer s'il est possible d'effectuer une estimation sur la base d'au moins l'une de valeurs de la déformation géométrique, qui doit être utilisée dans le calcul du décalage de disparité et est un résultat de la vérification effectuée par l'unité de vérification d'image (208), et d'une disparité.

3. Dispositif de traitement d'image stéréo selon la revendication 1, dans lequel

la déformation géométrique déterminée par l'unité de vérification d'image (208) est un rapport d'agrandissement entre des images.

4. Dispositif de traitement d'image stéréo selon la revendication 2, dans lequel

un objet devant être utilisé par l'unité de vérification d'image (208) est un plan.

5. Dispositif de traitement d'image stéréo selon la revendication 1, dans lequel

l'unité de stockage (207) est configurée pour stocker la déformation géométrique déterminée par l'unité de vérification d'image (208), et

l'unité d'estimation de décalage de disparité (209) est configurée pour estimer le décalage de disparité à partir d'un produit total de déformation géométrique calculée dans le passé et à l'instant actuel dans un laps de temps dans lequel une estimation est effectuée, et à partir de disparités dans le passé et à l'instant actuel dans le laps de temps.

# FIG. 1

# FIG. 2

# FIG. 3

301

307

302

x 0. 8

303

x 0. 9

304

x 1. 0

305

x 1. 1

306

x 1. 2

# FIG. 4

```
                    FRAME

            DETECT OBJECT,                      ⌇─ 401
        AND SET IMAGE REGION AS I

          CALCULATE DISPARITY (d)              ⌇─ 402
                 OF OBJECT

   No     DETERMINE WHETHER THERE              ⌇─ 403
          IS RESULT OF DETECTION OF
                PREVIOUS FRAME?

                  Yes

          CHECK IMAGE I AGAINST J,             ⌇─ 406
             AND CALCULATE
          ENLARGEMENT RATIO (s)

   No     DETERMINE WHETHER IT IS              ⌇─ 407
          POSSIBLE TO CALCULATE
             DISPARITY OFFSET

                  Yes

          ESTIMATE DISPARITY                   ⌇─ 408
             OFFSET εd
                                               ⌇─ 409

        DETERMINE REPRESENTATIVE
         VALUE OF DISPARITY OFFSET

                                               ⌇─ 404

          SAVE I AS J AND d AS d'              ⌇─ 404
              INTO MEMORY

           OUTPUT CORRECTED                    ⌇─ 410
              DISTANCE
```

IMAGE J
DISPARITY d'          ⌇─ 404

# FIG. 5

FRAME

DETECT OBJECT,
AND SET IMAGE REGION AS I

CALCULATE DISPARITY (d)
OF OBJECT

DETERMINE WHETHER THERE
IS RESULT OF DETECTION OF
PAST FRAMES? — 501

SELECT FRAME $\tau$ FOR
ENLARGEMENT RATIO
CALCULATION — 504

CHECK I AGAINST IMAGE J$\tau$,
AND CALCULATE ENLARGEMENT
RATIO (s$\tau$) — 505

DETERMINE WHETHER IT IS
POSSIBLE TO CALCULATE
DISPARITY OFFSET — 506

ESTIMATE DISPARITY OFFSET $\varepsilon$d — 506

DETERMINE REPRESENTATIVE
VALUE OF DISPARITY OFFSET — 507

SAVE I AS Jt AND d AS dt
INTO MEMORY, t++ — 502

OUTPUT CORRECTED
DISTANCE

IMAGE Jt
DISPARITY dt — 503

No

No

Yes

# FIG. 6

```
                    ┌──────────────────────┐
                    │        FRAME         │
                    └──────────────────────┘
                               │
            ┌──────────────────────────────────────┐
            │         DETECT OBJECT,               │
            │  AND SET IMAGE REGION AS I           │
            └──────────────────────────────────────┘
                               │
            ┌──────────────────────────────────────┐
            │      CALCULATE DISPARITY (d)          │
            │           OF OBJECT                   │
            └──────────────────────────────────────┘
                               │
            ┌──────────────────────────────────────┐  601
   No       │  DETERMINE WHETHER THERE             │
  ◀─────────│  IS RESULT OF DETECTION OF           │
            │       PREVIOUS FRAME?                │
            └──────────────────────────────────────┘
                          Yes │
            ┌──────────────────────────────────────┐  602
            │   CHECK IMAGE I AGAINST J,           │
            │        AND CALCULATE                 │
            │     ENLARGEMENT RATIO s              │
            └──────────────────────────────────────┘
                               │
            ┌──────────────────────────────────────┐  603
            │  SAVE ENLARGEMENT RATIO s            │
            │  AS st INTO STORAGE AREA             │
            └──────────────────────────────────────┘
                               │
            ┌──────────────────────────────────────┐  605
   No       │   SELECT DISPARITY OFFSET            │
  ◀─────────│    CALCULATION FRAMES                │
            └──────────────────────────────────────┘
                          Yes │                        606
            ┌──────────────────────────────────────┐
            │     DERIVE CUMULATIVE                │
            │   ENLARGEMENT RATIO                  │
            └──────────────────────────────────────┘
                               │                        607
            ┌──────────────────────────────────────┐
            │  CALCULATE DISPARITY OFFSET          │
            └──────────────────────────────────────┘
                               │
            ┌──────────────────────────────────────┐
            │ DETERMINE REPRESENTATIVE             │
            │ VALUE OF DISPARITY OFFSET            │
            └──────────────────────────────────────┘
                               │
            ┌──────────────────────────────────────┐
            │  SAVE I AS J AND d AS dt INTO        │
            │      STORAGE AREA, t++               │
            └──────────────────────────────────────┘
                               │
            ┌──────────────────────────────────────┐
            │    OUTPUT CORRECTED                  │
            │        DISTANCE                      │
            └──────────────────────────────────────┘
```

604

IMAGE J

ENLARGEMENT RATIO st
DISPARITY dt

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003083742 A

- JP 2009008539 A